# EUROPEAN PATENT APPLICATION

(11) **EP 1 932 623 A1**
(43) Date of publication of application: **18.06.2008**
(21) Application number: 06256337.4
(22) Date of filing: 13.12.2006
(51) Int. Cl.: B25B 23/04, F16B 27/00

(54) **Combined screw strip and strip-advancing mechanism for a screw driving gun**

(71) Applicant: Kwantex Research Inc., Kuan Miao Hsiang, Tainan Hsien (TW)
(72) Inventor: Lin, Chao-Wei, E.Dist., Tainan City (TW)
(74) Representative: Moir, Michael Christopher

(57) **Abstract**

A combined screw strip and strip-advancing mechanism for a screw driving gun includes a sliding unit (5) connected telescopically to a barrel unit (4), and including two separated strip-positioning plates (53) each formed with an engaging groove (531) engaging movably a corresponding one of two engaging ribs (35) of a strip body (3) mounted with screws (30). A spring-biased positioning member (7) is mounted pivotally on the sliding unit (5) and abuts against the strip body (3) for maintaining engagement between the engaging ribs (35) and the engaging grooves (531). A lifting member (6) is connected pivotally to the sliding unit (5) by a pivot pin (43) movable along a guiding groove unit (411) in the barrel unit (4) such that the lifting member (6) pivots so as to lift upwardly the strip body (3) by a desired distance when the sliding unit (5) is moved from an extended position to a retracted position.

## Description

The invention relates to a screw strip advancing mechanism for a screw driving gun, more particularly to a combined screw strip and strip-advancing mechanism for a screw driving gun.

Figure 1 illustrates a conventional screw strip-advancing mechanism 2 disclosed in U.S. Patent No. 6,904,834. The conventional screw strip-advancing mechanism 2 is used for advancing upwardly a screw strip 20 such that a plurality of screws retained on the screw strip 20 can be driven in sequence by the screw driving gun (not shown). The conventional screw strip 20 includes a sliding unit 21 that has two strip-positioning plates 211. The screw strip 20 has opposite lateral sides abutting respectively and movably against the strip-positioning plates 211.

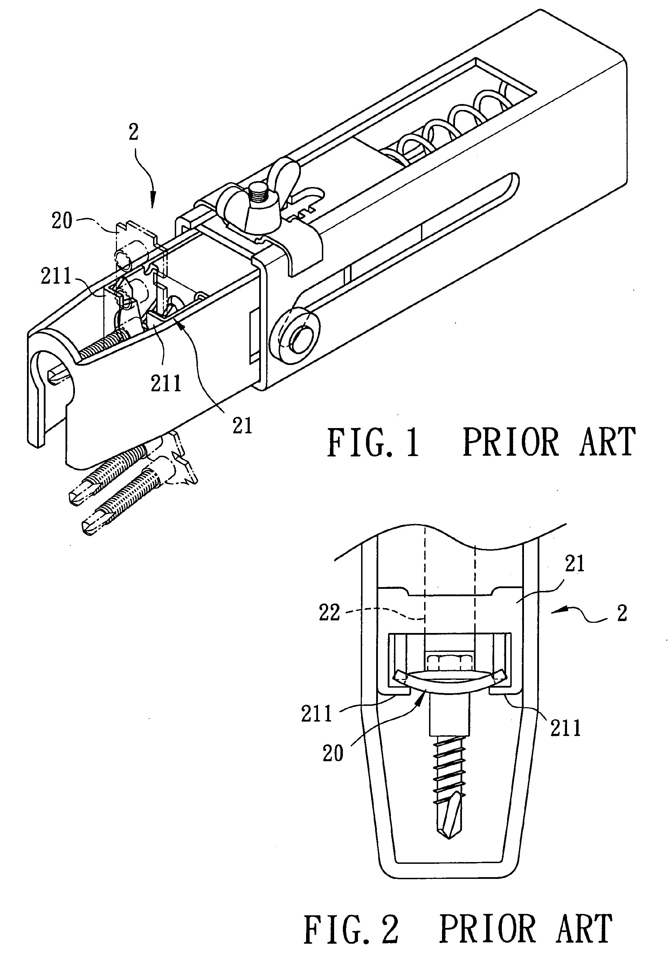

Referring to Figure 2, during a screw driving operation, a selected one of the screws on the screw strip 20 is driven by a driving shaft 22 of the screw driving gun such that the screw strip 20 deforms as a result of pressure applied by the driving shaft 22, thereby resulting in possible removal of the screw strip 20 from the strip-positioning plates 211.

Therefore, the object of the present invention is to provide a combined screw strip and strip-advancing mechanism that can overcome the aforesaid drawbacks of the prior art.

According to the present invention, there is provided a combined screw strip and strip-advancing mechanism for a screw driving gun. The combined screw strip and strip-advancing mechanism comprises:
a strip body adapted for retaining detachably a plurality of screws thereon and having two opposite lateral sides each formed with a plurality of engaging notches, each of which is disposed between two adjacent ones of the screws on the strip body, the strip body further having opposite first and second surfaces, and two engaging ribs disposed respectively adjacent to the lateral sides and projecting from the first surface;
a barrel unit having a front end, and a rear end adapted to be connected to the screw driving gun and adapted to receive a driving shaft of the screw driving gun therein, the barrel unit being formed with a guiding groove unit;
a sliding unit connected telescopically to the barrel unit and movable in a first direction relative to the barrel unit between extended and retracted positions, the sliding unit including two strip-positioning plates spaced apart from each other in a second direction that is perpendicular to the first direction, each of the strip-positioning plates being formed with an engaging groove engaging movably a corresponding one of the engaging ribs of the strip body;
a biasing member for biasing the sliding unit to the extended position;
a spring-biased positioning member mounted pivotally on the sliding unit, positioning the strip body on the strip-positioning plates of the sliding unit, and abutting against the second surface of the strip body so as to maintain engagement between the engaging ribs of the strip body and the engaging grooves in the strip-positioning plates of the sliding unit;
a pivot pin extending in the second direction through the sliding unit and movable along the guiding groove unit so as to move together with the sliding unit relative to the barrel unit; and
a lifting member having a rear end portion connected pivotally to the sliding unit such that the lifting member is pivotable relative to the sliding unit about an axis parallel to the second direction, a front end portion engaging releasably two selected ones of the engaging notches in the strip body, and an intermediate portion interconnecting the front and rear end portions and sleeved rotatably on the pivot pin.

When the sliding unit is moved relative to the barrel unit from the extended position to the retracted position, the lifting member moves together with the sliding unit toward the rear end of the barrel unit, and pivots about the axis due to movement of the pivot pin along the guiding groove unit in the barrel unit such that the front end portion of the lifting member pivots upwardly from a first position to a second position higher than the first position, thereby lifting upwardly the strip body by a distance substantially equal to that between two adjacent ones of the screws on the strip body.

Other features and advantages of the present invention will become apparent in the following detailed description of the preferred embodiment with reference to the accompanying drawings, of which:
Figure 1 is a perspective view of a conventional screw strip-advancing mechanism for a screw driving gun;
Figure 2 is a fragmentary schematic top view illustrating the conventional screw strip-advancing mechanism of Figure 1 when a driving shaft abuts against a screw on a screw strip;
Figure 3 is a perspective view showing the preferred embodiment of a combined screw strip and strip-advancing mechanism for a screw driving gun according to the present invention;
Figure 4 is an exploded perspective view showing the preferred embodiment, excluding a strip body;
Figure 5 is a fragmentary, partly sectional schematic view illustrating connection relationship among components of the preferred embodiment;
Figure 6 is a fragmentary schematic top view showing the preferred embodiment;
Figure 7 is a fragmentary, partly sectional schematic view illustrating the preferred embodiment when a sliding unit is disposed at an extended position; and
Figure 8 is a fragmentary, partly sectional schematic view illustrating the preferred embodiment when the sliding unit is disposed at a retracted position.

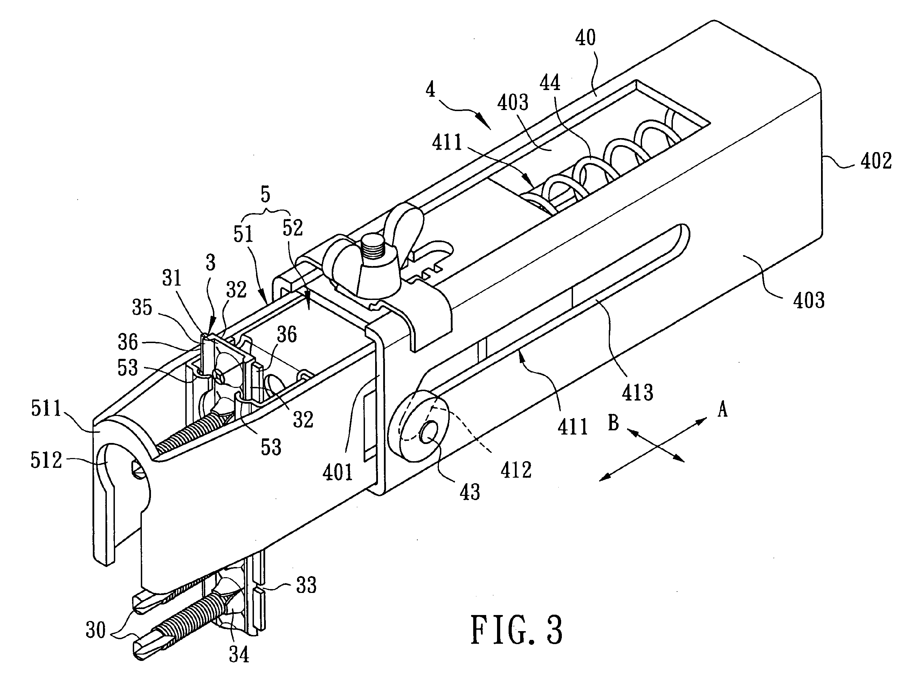

Referring to Figures 3, 4, 7 and 8, the preferred embodiment of a combined screw strip and strip-advancing mechanism for a screw driving gun (not shown) according to the present invention is shown to include a strip body 3, a barrel unit 4, a sliding unit 5, a biasing member 44, a spring-biased positioning member 7, a pivot pin 43, and a lifting member 6.

The strip body 3 is adapted for retaining detachably a plurality of screws 30 thereon, and has two opposite lateral sides 36 each formed with a plurality of engaging notches 33. Each engaging notch 33 is disposed between two adjacent ones of the screws 30 on the strip body 3. The strip body 3 further has opposite first and second surfaces 31, 32, and two engaging ribs 35 disposed respectively adjacent to the lateral sides 36 and projecting from the first surface 31.

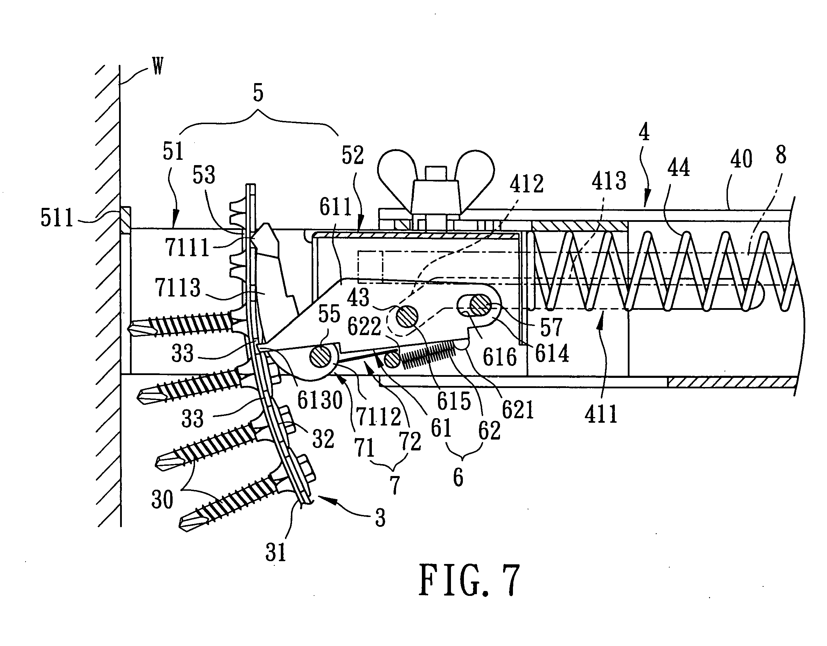

The barrel unit 4 includes a casing 40 that has a front end 401, and a rear end 402 adapted to be connected to the screw driving gun and adapted to receive a driving shaft 8 of the screw driving gun therein (see Figure 7). The barrel unit 4 is formed with a guiding groove unit. In this embodiment, the guiding groove unit includes a pair of guiding grooves 411 formed respectively in opposite lateral walls 403 of the casing 40, as shown in Figure 3. Each guiding groove 411 has an upwardly and rearwardly extending inclined first groove portion 412 disposed adjacent to the front end 401 of the casing 40, and a second groove portion 413 connected to and disposed behind the first groove portion 412 and extending in a first direction (A).

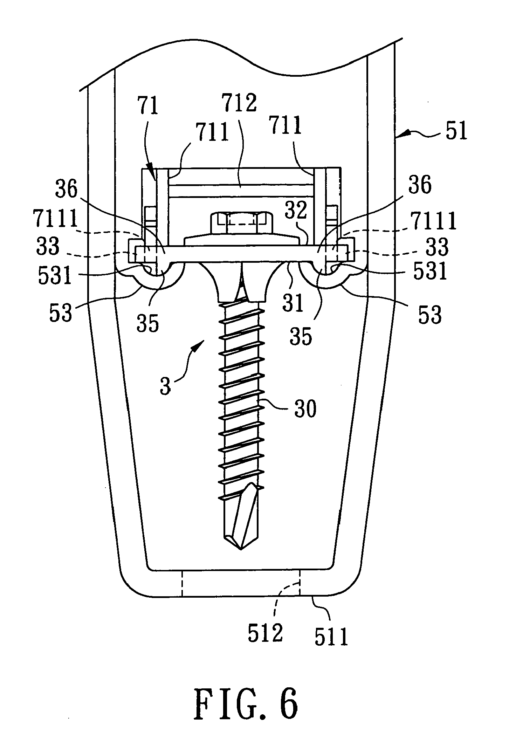

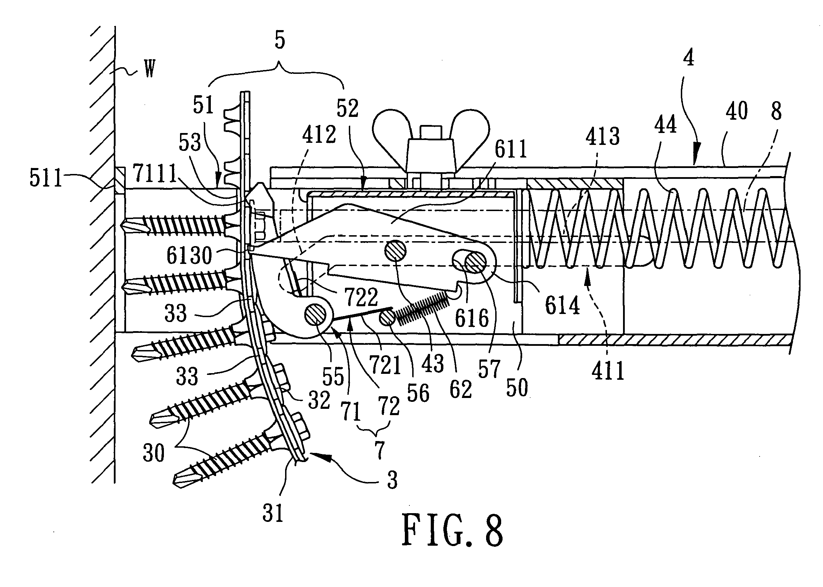

The sliding unit 5 is connected telescopically to the barrel unit 4, and is movable in the first direction (A) relative to the barrel unit 4 between an extended position (see Figure 7) and a retracted position (see Figure 8). In this embodiment, the sliding unit 5 includes an outer sliding frame 51, and an inner strip-mounting seat 52 mounted fixedly in the outer sliding frame 51. The inner strip-mounting seat 52 has opposite lateral walls 521 each formed with a through hole 520, a top wall 522 interconnecting top ends of the lateral walls 521, and two strip-positioning plates 53 extending respectively from front ends of the lateral walls 521 toward each other and spaced apart from each other in a second direction (B) that is perpendicular to the first direction (A). Each strip-positioning plate 53 is formed with an engaging groove 531 engaging movably a corresponding one of the engaging ribs 35 of the strip body 3, as shown in Figure 6. The strip-mounting seat 52 further has first, second and third coupling rods 55, 56, 57 extending in the second direction (B) and interconnecting the lateral walls 521. The outer sliding frame 51 has a front end 511 adapted to abut against a workpiece (W), such as a wall, as shown in Figure 7, and formed with an opening 512 for permitting extension of one of the screws 30 on the strip body 3 to be screwed therethrough, as shown in Figure 3.

The biasing member 44, such as a coil spring, is disposed in the casing 40 for biasing the sliding unit 5 to the extended position, as shown in Figure 3.

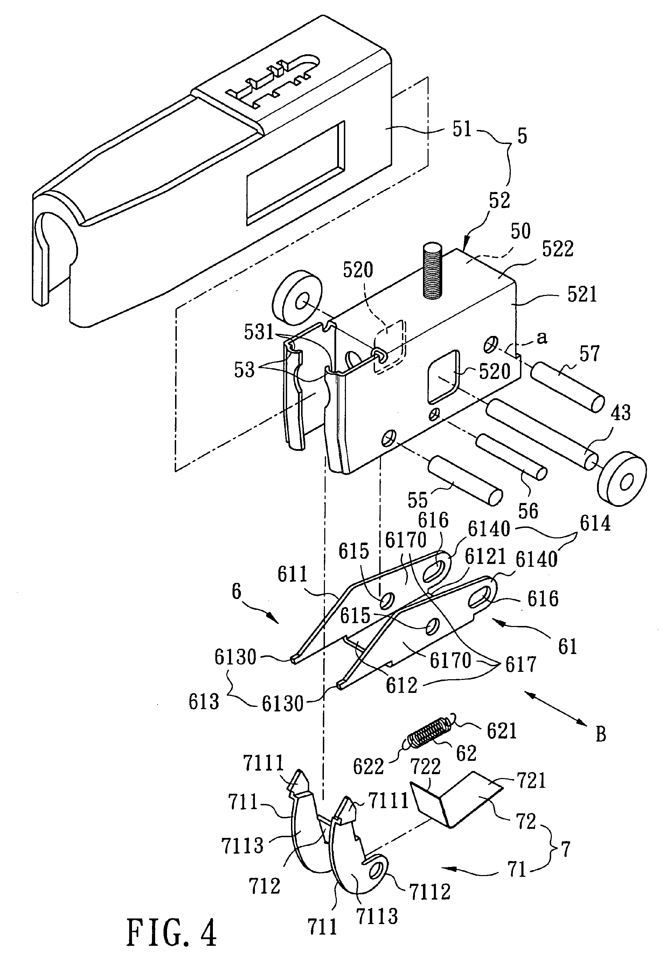

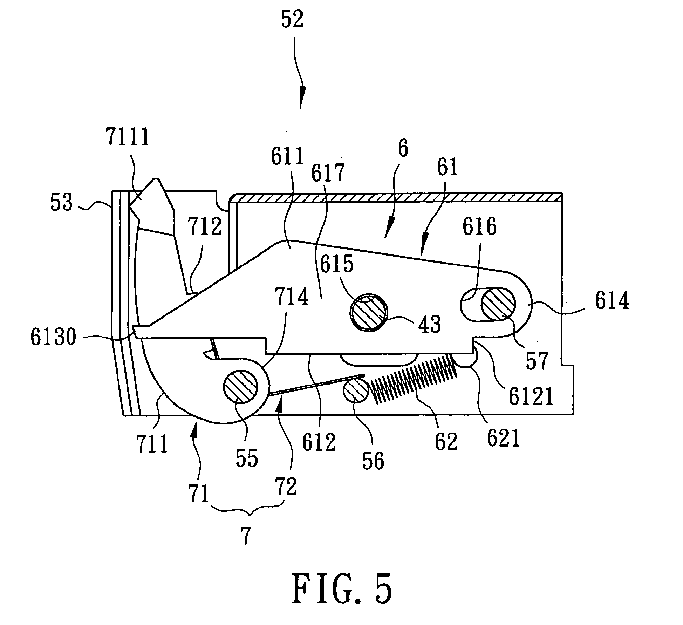

Referring further to Figures 5 and 6, the spring-biased positioning member 7 is mounted pivotally on the sliding unit 5 for positioning the strip body 3 on the strip-positioning plates 53 of the inner strip-mounting seat 52 of the sliding unit 5, and abuts against the second surface 32 of the strip body 3 so as to maintain engagement between the engaging ribs 35 of the strip body 3 and the engaging grooves 531 in the strip-positioning plates 53 of the inner strip-mounting seat 52 of the sliding unit 5. In this embodiment, the spring-biased positioning member 7 includes a positioning frame 71 and an L-shaped spring plate 72. The positioning frame 71 has two parallel positioning arms 711 spaced apart from each other in the second direction (B), and a coupling plate 712 interconnecting the positioning arms 711, as shown in Figure 4. Each positioning arm 711 has an engaging end portion 7111 engaging one of the engaging notches 33 in the strip body 3 that is aligned therewith, a coupling end portion 7112 opposite to the engaging end portion 7111 and sleeved rotatably on the first coupling rod 55 of the inner strip-mounting seat 52 of the sliding unit 5, and an intermediate abutting portion 7113 interconnecting the engaging end portion 7111 and the coupling end portion 7112 and abutting against the second surface 32 of the strip body 3, as shown in Figure 7. In this embodiment, the L-shaped spring plate 72 has a first plate portion 721 abutting against the second coupling rod 56 of the inner strip-mounting seat 52 of the sliding unit 5, and a second plate portion 722 connected to one end of the first plate portion 721, disposed between the first coupling rod 55 of the inner strip-mounting seat 52 and the coupling plate 712 of the positioning frame 71, and abutting against the coupling plate 712 for biasing the positioning frame 71 to abut against the second surface 32 of the strip body 3, as shown in Figure 8.

The pivot pin 43 extends in the second direction (B) through the through holes 520 in the inner strip-mounting seat 52 and the outer sliding frame 51, and is movable along the guiding grooves 411 of the guiding groove unit so as to move together with the sliding unit 5 relative to the barrel unit 4.

The lifting member 6 has a rear end portion 614 connected pivotally to the sliding unit 5 such that the lifting member 6 is pivotable relative to the sliding unit 5 about an axis (a) (see Figure 4), which extends along the third coupling rod 57 in this embodiment, a front end portion 613 engaging releasably two selected ones of the engaging notches 33 in the strip body 3, and an intermediate portion 617 interconnecting the front and rear end portions 613, 614 and sleeved rotatably on the pivot pin 43. The lifting member 6 includes a lifting frame 61 that has two parallel lifting arms 611 spaced apart from each other in the second direction (B), and a connecting plate 612 interconnecting the lifting arms 611. Each lifting arm 611 has a coupling end portion 6140 formed with a through hole 616 for permitting extension of the third coupling rod 57 therethrough, a lifting end portion 6130 opposite to the coupling end portion 6140, and an intermediate coupling portion 6170 that is interconnected among the coupling end portion 6140, the lifting end portion 6130 and the connecting plate 612 and that is formed with a through hole 615 for permitting extension of the pivot pin 43 therethrough, as shown in Figure 7. The coupling end portions 6140 of the lifting arms 611 constitute the rear end portion 614 of the lifting member 6. The lifting end portions 6130 of the lifting arms 611 constitute the front end portion 613. Each lifting end portion 6130 is engagable with a selected one of the engaging notches 33. The intermediate coupling portions 6170 of the lifting arms 611 and the connecting plate 612 constitute the intermediate portion 617 of the lifting member 6.

In such a configuration, when the barrel unit 4 is pressed toward the workpiece (W) so as to move the sliding unit 5 relative to the barrel unit 4 from the extended position to the retracted position, the lifting member 6 moves together with the sliding unit 5 toward the rear end 402 of the casing 40 of the barrel unit 4, and pivots about the axis (a) due to movement of the pivot pin 43 along the guiding grooves 411 of the guiding groove unit in the casing 40 of the barrel unit 4 such that the front end portion 613 of the lifting member 6 pivots upwardly from a first position (shown in Figure 7) to a second position (shown in Figure 8) higher than the first position, thereby lifting upwardly the strip body 3 by a distance substantially equal to that between two adjacent ones of the screws 30 on the strip body 3 so as to enable a desired one of the screws 30 on the strip body 3 to be aligned with the driving shaft 8 of the screw driving gun. Thereafter, the desired one of the screws 30 on the strip body 3 is moved from the strip body 3 and is driven into the workpiece (W) by the driving shaft 8. Subsequently, the barrel unit 4 is released so as to move the sliding unit 5 relative to the barrel unit 4 from the retracted position back to the extended position. Hence, the front end portion 613 of the lifting member 6 pivots downwardly from the second position to the first position. At the same time, the lifting end portion 6130 of each lifting arm 611 of the lifting member 6 is moved from the selected one of the engaging notches 33 in the strip body 3 along the second surface 32 of the strip body 3, and engages an adjacent lower one of the engaging notches 33 in the strip body 3.

In this embodiment, the lifting member 6 further includes a biasing piece 62, such as a coil spring, that has a first end 621 coupled to an end 6121 of the coupling plate 612, and a second end 622 opposite to the first end 621 and coupled to the second coupling rod 56 for biasing the front end portion 613 of the lifting frame 61 to the first position.

In sum, since the engaging ribs 35 of the strip body 3 engage respectively the engaging grooves 531 in the strip-positioning plates 53 of the sliding unit 5, the strip body 3 can be securely positioned so as to prevent removal of the strip body 3 from the strip-positioning plates 53 during operation.

Each feature disclosed in this specification (which term includes the claims) and/or shown in the drawings may be incorporated in the invention independently of other disclosed and/or illustrated features.

Statements in this specification of the "objects of the invention" relate to preferred embodiments of the invention, but not necessarily to all embodiments of the invention falling within the claims. Reference numerals appearing in the claims are illustrative only and the claims shall be interpreted as if they are not present.

The description of the invention with reference to the drawings is by way of example only.

The text of the abstract filed herewith is repeated here as part of the specification.

A combined screw strip-advancing mechanism for a screw driving gun includes a sliding unit (5) connected telescopically to a barrel unit (4), and including two separated strip-positioning plates (53) each formed with an engaging groove (531) engaging movably a corresponding one of two engaging ribs (35) of a strip body (3) mounted with screws (30). A spring-biased positioning member (7) is mounted pivotally on the sliding unit (5) and abuts against the strip body (3) for maintaining engagement between the engaging ribs (35) and the engaging grooves (531). A lifting member (6)is connected pivotally to the sliding unit (5) by a pivot pin (43) movable along a guiding groove unit (411) in the barrel unit (4) such that the lifting member (6) pivots so as to lift upwardly the strip body (3) by a desired distance when the sliding unit (5) is moved from an extended position to a retracted position.

## Claims

1. A combined screw strip and strip-advancing mechanism for a screw driving gun, **characterized by**:
a strip body (3) adapted for retaining detachably a plurality of screws (30) thereon and having two opposite lateral sides (36) each formed with a plurality of engaging notches (33), each of which is disposed between two adjacent ones of the screws (30) on said strip body (3), said strip body (3) further having opposite first and second surfaces (31, 32), and two engaging ribs (35) disposed respectively adjacent to said lateral sides (36) and projecting from said first surface (31);
a barrel unit (4) having a front end (401), and a rear end (402) adapted to be connected to the screw driving gun and adapted to receive a driving shaft (8) of the screw driving gun therein, said barrel unit (4) being formed with a guiding groove unit (411);
a sliding unit (5) connected telescopically to said barrel unit (4) and movable in a first direction (A) relative to said barrel unit (4) between extended and retracted positions, said sliding unit (5) including two strip-positioning plates (53) spaced apart from each other in a second direction (B) that is perpendicular to the first direction (A), each of said strip-positioning plates (53) being formed with an engaging groove (531) engaging movably a corresponding one of said engaging ribs (35) of said strip body (3) ;
a biasing member (44) for biasing said sliding unit (5) to the extended position;
a spring-biased positioning member (7) mounted pivotally on said sliding unit (5), positioning said strip body (3) on said strip-positioning plates (53) of said sliding unit (5), and abutting against said second surface (32) of said strip body (3) so as to maintain engagement between said engaging ribs (35) of said strip body (3) and said engaging grooves (531) in said strip-positioning plates (53) of said sliding unit (5) ;
a pivot pin (43) extending in the second direction (B) through said sliding unit (5) and movable along said guiding groove unit (411) so as to move together with said sliding unit (5) relative to said barrel unit (4) ; and
a lifting member (6) having a rear end portion (614) connected pivotally to said sliding unit (5) such that said lifting member (6) is pivotable relative to said sliding unit (5) about an axis (a) parallel to the second direction (B), a front end portion (613) engaging releasably two selected ones of said engaging notches (33) in said strip body (3), and an intermediate portion (617) interconnecting said front and rear end portions (613, 614) and sleeved rotatably on said pivot pin (43);
whereby, when said sliding unit (5) is moved relative to said barrel unit (4) from the extended position to the retracted position, said lifting member (6) moves together with said sliding unit (5) toward said rear end (402) of said barrel unit (4), and pivots about the axis (a) due to movement of said pivot pin (43) along said guiding groove unit (411) in said barrel unit (4) such that said front end portion (613) of said lifting member (6) pivots upwardly from a first position to a second position higher than the first position, thereby lifting upwardly said strip body (3) by a distance substantially equal to that between two adjacent ones of the screws (30) on said strip body (3).

2. The combined screw strip and strip-advancing mechanism as claimed in Claim 1, **characterized in that** said lifting member (6) includes:
a lifting frame (61) having said front and rear end portions (613, 614), and said intermediate portion (617) of said lifting member (6); and
a biasing piece (62) for biasing said front end portion (613) of said lifting frame (61) to the first position.

3. The combined screw strip and strip-advancing mechanism as claimed in Claim 2, further **characterized in that** said lifting frame (61) of said lifting member (6) has two parallel lifting arms (611) spaced apart from each other in the second direction (B), and a connecting plate (612) interconnecting said lifting arms (611), each of said lifting arms (611) having a coupling end portion (6140), a lifting end portion (6130) opposite to said coupling end portion (6140), and an intermediate coupling portion (6170) interconnected among said coupling end portion (6140), said lifting end portion (6130) and said connecting plate (612) and formed with a through hole (615) for permitting extension of said pivot pin (43) therethrough, said coupling end portions(6140) of said lifting arms (611) constituting said rear end portion (614) of said lifting member (6), said lifting end portions (6130) of said lifting arms (611) constituting said front end portion (613), said intermediate coupling portions (6170) of said lifting arms (611) and said connecting plate (612) constituting said intermediate portion (617) of said lifting member (6).

4. The combined screw strip and strip-advancing mechanism as claimed in Claim 1, **characterized in that** said positioning member (7) includes:
a positioning frame (71) connected pivotally to said sliding unit (5); and
an L-shaped spring plate (72) for biasing said positioning frame (71) to abut against said second surface (32) of said strip body (3).

5. The combined screw strip and strip-advancing mechanism as claimed in Claim 4, further **characterized in that** said positioning frame (71) of said positioning member (7) has two parallel positioning arms (711) spaced apart from each other in the second direction (B), and a coupling plate (712) interconnecting said positioning arms (711), each of said positioning arms (711) having an engaging end portion (7111) engaging one of said engaging notches (33) in said strip body (3) that is aligned therewith, a coupling end portion (7112) opposite to said engaging end portion (7111) and connected pivotally to said sliding unit (5), and an intermediate abutting portion (7113) interconnecting said engaging end portion (7111) and said coupling end portion (7112) and abutting against said second surface (32) of said strip body (3).

6. A screw carrier for a screw driving gun, the carrier comprising an elongated strip of material adapted detachably to retain screws spaced apart along its length, and having retaining means extending longitudinally along the strip for engagement by the screw driving gun to locate the strip and reduce deformation thereof whilst a screw is being driven from the strip by the gun.

7. A screw carrier as claimed in claim 6, comprising any one or more of the individual screw strip features appearing in any of claims 1 to 5.

8. A screw driving gun comprising a screw carrier guide having means for engaging the retaining means of a screw carrier according to claim 6.

9. A screw driving gun as claimed in claim 8 comprising any one or more of the individual features appearing in any of claims 1 to 5.
